# EUROPÄISCHE PATENTANMELDUNG

(11) **EP 1 041 383 A2**
(43) Veröffentlichungstag der Anmeldung: **04.10.2000**
(21) Anmeldenummer: 00102914.9
(22) Anmeldetag: 12.02.2000
(51) Int. Cl.: G01N 33/00

(54) **Poröse Elektrodenstruktur für einen Gassensor und Sensoranordnung**

(30) Priorität: 31.03.1999 DE 19914628
(71) Anmelder: Heraeus Electro-Nite International N.V., 3530 Houthalen (BE)
(72) Erfinder: Guth, Ulrich, Prof. Dr., 17491 Greifswald (DE); Sandow, Klaus-Peter, 3390 Sint-Joris-Winge (BE); Westphal, Dietrich, 17489 Greifswald (DE)
(74) Vertreter: Kühn, Hans-Christian

(57) **Zusammenfassung**

Die Erfindung betrifft eine poröse Elektrodenstruktur für einen Gassensor sowie eine Sensoranordnung. Der Erfindung liegt die Aufgabe zugrunde, eine Elektrodenstruktur sowie eine Sensoranordnung zur Detektion von Kohlenwasserstoffen in einem Meßgas zur Verfügung zu stellen, die neben einer niedrigen Impedanz eine hohe zeitliche Stabilität und Reproduzierbarkeit des Meßsignals gewährleistet. Die Aufgabe wird durch eine poröse Elektrodenstruktur gelöst, die ein leitfähiges Goldgerüst aufweist, welches oxidische Bestandteile enthält.

## Beschreibung

Die Erfindung betrifft eine poröse Elektrodenstruktur für einen Gassensor sowie eine Sensor-anordnung.

Aus DE 197 01 493 C1 sind Gassensoren auf der Basis von halbleitendem Galliumoxid zu Detektion reduzierender Gase wie Kohlenwasserstoffe, Wasserstoff oder auch von Lösungsmitteln bekannt. Dabei liegt eine Galliumoxid-Schicht auf zwei elektrisch getrennten Elektroden. Bei Einwirken von reduzierenden Gasen auf die Galliumoxid-Schicht ändert sich ihr elektrischer Widerstand, der ein Maß für die Konzentration des Meßgases darstellt. Durch eine Belegung der Galliumoxid-Schicht mit einer nicht geschlossenen Schicht von Gold-Inseln wird eine Erhöhung der Sensitivität auf Kohlenmonoxid erreicht. Die Herstellungsparameter der sensitiven Schicht sind schwer zu reproduzieren und beeinflussen das Meßergebnis maßgeblich.
Aus DE 195 35 381 A1 sind Elektrodenmaterialien und Sensoranordnungen zur Detektion von Kohlenwasserstoffen auf der Basis von Lanthanoid- oder Seltenerdverbindungen bekannt, die mit Hilfe eines amperometrischen wie auch potentiometrischen Meßprinzips betrieben werden können. Nachteilig ist die hohe Impedanz dieser Elektroden aufgrund ihrer niedrigen elektrischen Leitfähigkeit und beispielsweise das niedrige Haftvermögen des Materials auf einem Festelektrolyten. In der Beschreibung werden auch Elektroden aus Gold oder Goldlegierungen als sensitive Schichten für Kohlenwasserstoffe genannt, die schwerwiegende Nachteile aufweisen. Neben der geringen zeitlichen Stabilität weisen diese Elektroden aus Gold oder Goldlegierungen einen Memoryeffekt auf, der von vorhergehenden Gasbeaufschlagungen und Temperaturzyklen abhängig ist und eine ständige Kalibration erforderlich macht.

Der Erfindung liegt die Aufgabe zugrunde, eine Elektrodenstruktur sowie eine Sensoranordnung zur Detektion von Kohlenwasserstoffen zur Verfügung zu stellen, die neben einer niedrigen Impedanz eine hohe zeitliche Stabilität und Reproduzierbarkeit des Meßsignals gewährleistet.

Die Aufgabe wird durch eine poröse Elektrodenstruktur gelöst, die ein leitfähiges Goldgerüst aufweist, welches oxidische Bestandteile enthält. Überraschend tritt der bei Kohlenwasserstoff-Sensoren mit Elektroden aus Gold- oder Goldlegierungen feststellbare Memoryeffekt hier nicht auf. Für die erfindungsgemäße Elektrodenstruktur ist es wichtig, daß diese eine offene, das bedeutet durchgängige, Porosität aufweist, wobei die elektrische Leitfähigkeit des Goldgerüsts in allen Richtungen des Raums weiterhin gegeben sein muß. Die im leitfähigen Goldgerüst enthaltenen oxidischen Bestandteile können vorzugsweise Galliumoxid aufweisen. Dabei sollte das Galliumoxid bezogen auf das leitfähige Goldgerüst einen Anteil von 10 - 50 Gew.% einnehmen, vorzugsweise etwa 30 Gew.%. Die oxidischen Bestandteile können aber auch ein oder mehrere Sauerstoffionen leitende Festelektrolytmaterialien enthalten.
In den vorgeschlagenen Sensoranordnungen mindestens mit einem Sauerstoffionen leitenden Festelektrolyten, einer auf einer Meßgasseite angeordneten Meßelektrode und einer auf einer Referenzgasseite angeordneten Gegenelektrode, weist die Meßelektrode eine poröse Elektrodenstruktur mit einem leitfähigen Goldgerüst auf, welches oxidische Bestandteile enthält. Diese Anordnung für einen Gassensor ist zur Detektion von Kohlenwasserstoffen in einem Meßgas geeignet.
Dabei sind unterschiedlichste Sauerstoffionen leitende Festelektrolyte mit verschiedensten Dotierungsmaterialien und Zugabemengen einsetzbar wie auch Mischungen daraus.
Es erweist sich als besonders vorteilhaft, wenn die oxidischen Bestandteile der für Kohlenwasserstoffe sensitiven Meßelektrode Galliumoxid enthalten. Dabei sollte das Galliumoxid bezogen auf das leitfähige Goldgerüst einen Anteil von 10 - 50 Gew.% einnehmen, vorzugsweise von etwa 30 Gew.%.
Die oxidischen Bestandteile der Meßelektrode können auch ein oder mehrere Sauerstoffionen leitende Festelektrolytmaterialien enthalten. So läßt sich beispielsweise die Haftung oder der Ausdehnungskoeffizient zwischen dem verwendeten Sauerstoffionen leitenden Festelektrolyten und der für Kohlenwasserstoffe sensitiven Elektrode verbessern beziehungsweise anpassen, wenn diese zum Teil aus dem gleichen Sauerstoffionen leitenden Material besteht wie der eingesetzte Festelektrolyt.
Das zwischen der Meßelektrode und der Gegenelektrode gemessene Potential stellt bei Vorhandensein von Sauerstoff und Kohlenwasserstoffen im Meßgas ein Mischpotential dar, welches sich aufgrund der unterschiedlichen Sauerstoff- und Kohlenwasserstoff-Partialdrücke zwischen Meß- und Referenzgasraum einstellt. Eine Änderung des Sauerstoffpartialdruckes im Meßgas führt demnach auch zu einer Änderung des Potentials zwischen der Meßelektrode und Gegenelektrode. Um diese möglichen Veränderungen des Sauerstoff-Partialdruckes im Meßgas feststellen zu können und die daraus resultierenden Änderungen des Meßsignals von den Signalanteilen absondern zu können, welche die Änderungen der Kohlenwasserstoff-Partialdrücke im Meßgas anzeigen, ist ein Vergleich mit einem Signal eines in der Nähe angeordneten Sauerstoffsensors zweckmäßig. Das hier aufgrund der unterschiedlichen Sauerstoffpartialdrücke in Meßgas und Referenzgas gemessene Potential kann von dem Mischpotential zwischen Meßelektrode und Gegenelektrode abgezogen werden. Es resultieren in diesem Fall die Signalanteile, für die die Kohlenwasserstoffanteile im Meßgas verantwortlich sind.
So können auf dem Sauerstoffionen leitenden Festelektrolyten noch weitere Elektroden oder Elektrodenpaare aus anderen Materialien angeordnet sein, die eine Bestimmung der Konzentration weiterer im Meßgas enthaltener Gase zusammen mit dem Sauerstoffionen leitenden Festelektrolyten ermöglichen. Dies ist für den Erhalt eines Vergleichssignals, beispielsweise zur Feststellung von Änderungen des Sauerstoffpartialdruckes im Meßgas, zweckmäßig und erspart den Einsatz zusätzlicher Sensoranordnungen. Im Hinblick auf die Einsatztemperatur der erfindungsgemäßen Meßelektrode und auch bei einer zusätzlichen Nutzung des Sauerstoffionen leitenden Festelektrolyten der Anordnung beispielsweise als Sauerstoffsensor muß ein Festelektrolytmaterial mit ausreichender Sauerstoffionen-Leitfähigkeit verwendet werden. Der ideale Temperaturbereich für den Einsatz der oben beschiebenen, für Kohlenwasserstoffe sensitiven Meßelektrode in einer Sensoranordnung liegt im Bereich von 600 bis 700°C. Ist dieser Temperaturbereich am Einsatzort nicht vorhanden oder stabil gewährleistet, so ist die Verwendung von Heizelementen erforderlich. Vorteilhaft ist es dabei, wenn direkt auf dem Sauerstoffionen leitenden Festelektrolyten ein elektrisches Heizelement angeordnet ist, wobei zwischen Festelektrolyt und Heizelement eine oder mehrere isolierende Schichten angeordnet sein müssen. Dabei ist auch besonders auf eine elektrische Isolation zwischen dem Heizelement und den Elektroden des Gassensors zu achten. Allerdings können elektrische Heizelemente auch beabstandet zum Sauerstoffionen leitenden Festelektrolyten angeordnet sein.

Die Erfindung wird anhand der Figuren 1 bis 3 beispielhaft erläutert.
Fig. 1 Sensoranordnung zur Detektion von Kohlenwasserstoffen und Sauerstoff
Fig. 2 Aufbau der Elektroden- und Heizschichten der Sensoranordnung in Dickschichttechnik
Fig. 3 Ansprechverhalten der Sensoranordnung in Kohlenwasserstoff enthaltendem Meßgas

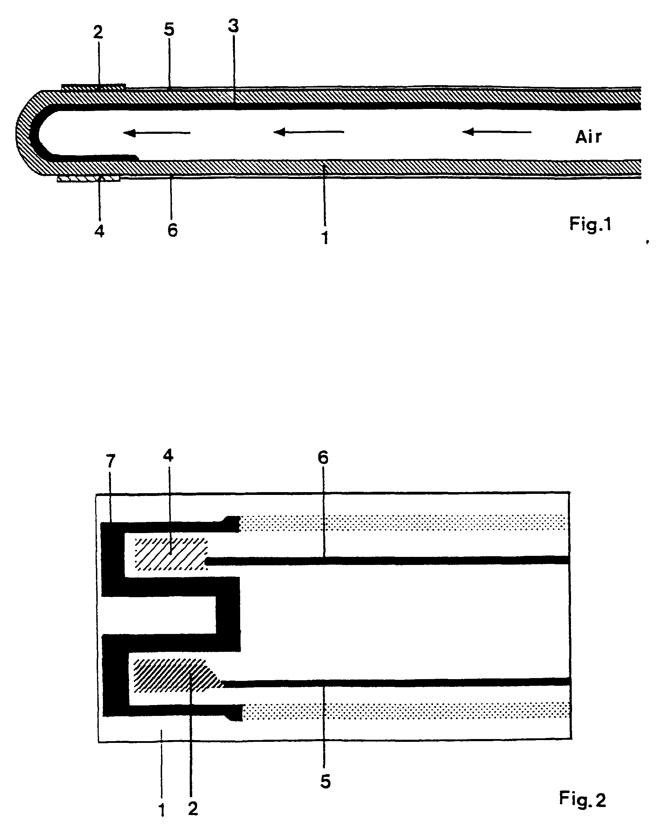

Die Fig. 1 zeigt eine mögliche Sensoranordnung mit potentiometrischem Meßprinzip zur Detektion von Kohlenwasserstoffen unter Verwendung der erfindungsgemäßen Elektrodenstruktur für den Einsatz im Abgas eines Kraftfahrzeuges. Der Sauerstoffionen leitende Festelektrolyt 1 ist hier in Form eines einseitig geschlossenen Röhrchens ausgeführt und dient gleichzeitig als Träger für die Elektroden 2; 3 und 4. Der Festelektrolyt 1 kann als Bulk-Material in weiteren konstruktiven Ausführungen gestaltet werden sowie als nichttragende Schicht auf einem separaten Trägergebilde ausgeführt werden. Als Material mit Sauerstoffionen leitender Eigenschaft kann beispielsweise Zirkonoxid oder Ceroxid verwendet werden, welches mit Magnesium, Kalzium, Yttrium, Scandium oder Seltenerdelementen wie beispielsweise Erbium oder Gadolinium zur Erhöhung der Sauerstoffionen-Leitfähigkeit mit unterschiedlichen Zugabemengen dotiert ist. Aber auch andere Sauerstoffionen leitende Verbindungen, beispielsweise auf der Basis von LaCaO₃, sind einsetzbar. Das Innere des Festelektrolyt-Röhrchens 1 wird mit einem Referenzgas gespült, beispielsweise mit Luft, die Außenseite des Festelektrolyt-Röhrchens 1 befindet sich im Meßgas, welches Kohlenwasserstoffe enthält. Die Meßgasseite und die Referenzgasseite müssen gasdicht voneinander getrennt sein. Diese Trennung ist hier nicht dargestellt. Auf das Festelektrolyt-Röhrchen 1 ist die erfindungsgemäße, für Kohlenwasserstoffe sensitive Meßelektrode 2, in dieser Ausführungsform in Dickschichttechnik, auf der Meßgasseite aufgebracht. Die Meßelektrode 2 ist mit einer leitfähigen Bahn 5 kontaktiert. Im Inneren des Festelektrolyt-Röhrchens 1 befindet sich die Gegenelektrode 3 auf der Referenzgasseite. Die Meßelektrode 2 und die Gegenelektrode 3 bilden ein Elektrodenpaar, welches den Abgriff des sich einstellenden Mischpotentials ermöglicht. Eine weitere Elektrode 4, kontaktiert mit der leitfähigen Bahn 6, ist im Meßgasraum auf das Festelektrolyt-Röhrchen 1 aufgebracht. Diese Elektrode 4, beispielsweise aus Platin, bildet mit der Gegenelektrode ein zweites Elektrodenpaar. Das hier aufgrund der unterschiedlichen Sauerstoffpartialdrücke in Meßgas und Referenzgas gemessene Potential wird von dem Mischpotential des ersten Elektrodenpaares abgezogen.

Fig. 2 zeigt die abgewickelte Mantelfläche des Festelektrolyt-Röhrchens 1 und die auf der Außenfläche angeordneten Elektrodenschichten in Dickschichttechnik. Die für Kohlenwasserstoffe sensitive Meßelektrode 2, kontaktiert mit der leitfähigen Bahn 5, ist direkt auf dem Festelektrolyt-Röhrchen 1 angeordnet. Die nur für Sauerstoff sensitive Elektrode 4, kontaktiert mit der leitfähigen Bahn 6, befindet sich beabstandet ebenfalls auf der Meßgasseite des FestelektrolytRöhrchens 1. Um die optimale Betriebstemperatur der Sensoranordnung schnell zu erreichen und stabil zu halten ist ein elektrisches Heizelement 7, hier in Mäanderform, nahe den Elektroden auf der Meßgasseite angeordnet.

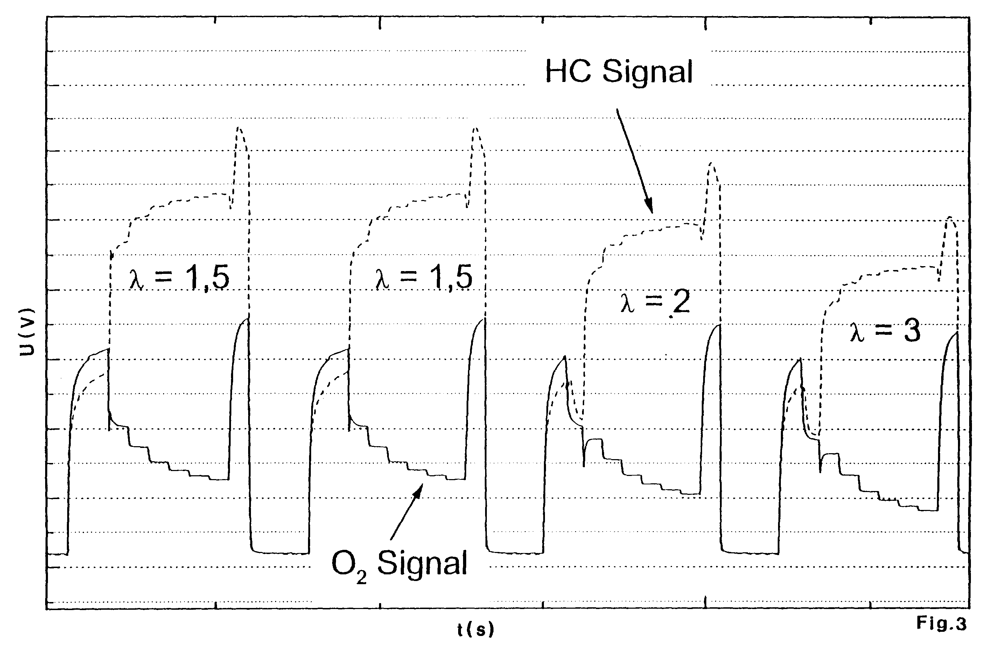

Fig. 3 zeigt das Ansprechverhalten der Sensoranordnung in Kohlenwasserstoff enthaltendem Meßgas. Im Diagramm sind die Spannungssignale des ersten, auf Änderungen der Kohlenwasserstoffmenge im Meßgas sensitiven Elektrodenpaares ( HC Signal) und die des zweiten, auf Änderungen der Sauerstoffmenge im Meßgas sensitiven Elektrodenpaares (O₂ Signal) über der Zeit aufgetragen. Dabei wurden die Elektroden im Meßgas mit unterschiedlichen Meßgasgemischen bei Lambda-Werten λ im Bereich von 1,5 bis 3 beaufschlagt. Der Lambda-Wert entspricht dem Verhältnis zwischen eingesetzter Luftmenge / Brennstoffmenge und stöchiometrischer Luftmenge / Brennstoffmenge, wobei Lambda-Werte kleiner 1 fetten oder reduzierenden Meßgaszusammensetzungen und Lambda-Werte größer 1 mageren oder oxidierenden Meßgaszusammensetzungen entsprechen.

## Patentansprüche

1. Poröse Elektrodenstruktur für einen Gassensor, dadurch gekennzeichnet, daß die Elektrodenstruktur ein leitfähiges Goldgerüst aufweist, welches oxidische Bestandteile enthält.

2. Poröse Elektrodenstruktur nach Anspruch 1, dadurch gekennzeichnet, daß die oxidischen Bestandteile Galliumoxid enthalten.

3. Poröse Elektrodenstruktur nach Anspruch 2, dadurch gekennzeichnet, daß das Galliumoxid bezogen auf das leitfähige Goldgerüst einen Anteil von 10 - 50 Gew.% einnimmt, vorzugsweise etwa 30 Gew.%.

4. Poröse Elektrodenstruktur gemäß einem der Ansprüche 1 bis 3, dadurch gekennzeichnet, daß die oxidischen Bestandteile ein oder mehrere Sauerstoffionen leitende Festelektrolytmaterialien enthalten.

5. Sensoranordnung mindestens mit einem Sauerstoffionen leitenden Festelektrolyten, einer auf einer Meßgasseite angeordneten Meßelektrode und einer auf einer Referenzgasseite angeordneten Gegenelektrode, dadurch gekennzeichnet, daß die Meßelektrode (2) eine poröse Elektrodenstruktur mit einem leitfähigen Goldgerüst aufweist, welches oxidische Bestandteile enthält.

6. Sensoranordnung nach Anpruch 5, dadurch gekennzeichnet, daß die oxidischen Bestandteile der Meßelektrode (2) Galliumoxid enthalten.

7. Sensoranordnung nach Anspruch 6, dadurch gekennzeichnet, daß das Galliumoxid bezogen auf das leitfähige Goldgerüst einen Anteil von 10 - 50 Gew.% einnimmt, vorzugsweise etwa 30 Gew.%.

8. Sensoranordnung nach einem der Ansprüche 5 bis 8, dadurch gekennzeichnet, daß die oxidischen Bestandteile der Meßelektrode (2) ein oder mehrere Sauerstoffionen leitende Festelektrolytmaterialien enthalten.

9. Sensoranordnung-nach einem der Ansprüche 5 bis 8, dadurch gekennzeichnet, daß auf dem Festelektrolyt (1) weitere Elektroden oder Elektrodenpaare angeordnet sind.

10. Sensoranordnung nach einem der Ansprüche 5 bis 9, dadurch gekennzeichnet, daß auf dem Festelektrolyt (1) ein elektrisches Heizelement (7) angeordnet ist.

11. Sensoranordnung gemäß einem der Ansprüche 5 bis 10, dadurch gekennzeichnet, daß beabstandet zum Festelektrolyt (1) ein elektrisches Heizelement angeordnet ist.
